(19) Europäisches Patentamt
European Patent Office
Office européen des brevets

(11) Publication number: **0 027 844**
**A1**

(12) # EUROPEAN PATENT APPLICATION

(21) Application number: **80102780.6**

(22) Date of filing: **20.05.80**

(51) Int. Cl.$^3$: **C 08 G 63/64**

(30) Priority: **29.10.79 US 88782**
**24.03.80 US 133227**

(43) Date of publication of application: **06.05.81**
**Bulletin 81/18**

(84) Designated Contracting States: **BE DE FR GB IT NL**

(71) Applicant: **ALLIED CHEMICAL CORPORATION,**
**Columbia Road and Park Avenue P.O. Box 2245R (Law Dept.), Morristown New Jersey 07960 (US)**

(72) Inventor: **Prevorsek, Dusan Ciril, 21 Harwich Road, Morristown New Jersey 07960 (US)**
Inventor: **DeBona, Bruce Todd, 23 Rose Avenue, Madison New Jersey 07940 (US)**

(74) Representative: **Baillie, Iain Cameron et al, c/o Ladas & Parry Blumenstrasse 48, D-8000 München 2 (DE)**

(54) **Poly(ester carbonate) with high glass transition temperature.**

(57) Poly(ester carbonate) formed by the condensation of an aromatic dihydric alcohol, phosgene and an aromatic or cycloaliphatic dicarboxylic acid or acid halide with at least about 25 mole percent of the dihydric alcohol being a tricyclic aromatic bisphenol, linked in a para-fashion, with all four sites ortho to the phenolic hydroxyl groups being substituted with bromine, chlorine or alkyl of 1–6 carbons. Such poly(ester carbonates) have higher glass transition temperatures than poly(ester carbonates) prepared with unsubstituted bicyclic bisphenols only, while retaining a desirable combination of tensile properties and ductility.

EP 0 027 844 A1

DESCRIPTION

# POLY(ESTER CARBONATE) WITH HIGH GLASS TRANSITION TEMPERATURE

The U.S. Government has a paid-up license in this invention and the right in limited circumstances to require the patent owner to license others on reasonable terms as provided for by the terms of contract RFP F33615-78C-5077 awarded by the U.S. Air Force.

## BACKGROUND OF THE INVENTION

The present invention relates to poly(ester-carbonates) and especially to poly(ester carbonates) with at least a portion of the hydroxyl groups supplied by substituted tricyclic aromatic compounds.

Polycarbonates of various bisphenols including some bisphenols blocked in all ortho positions, are known from U.S. Patent 3,879,348 to Serini et al. (issued April 22, 1975) and 3,890,266 to Serini et al. (issued June 17, 1975). Polycarbonates of unsubstituted tricyclic bisphenols are described in U.S. Patent 3,393,244 to Broderick et al. (issued July 16, 1968).

Poly(ester carbonates) are a known class of polymers, being described for example in U.S. Patent 3,169,121 to Goldberg (Feb. 9, 1965), U. S. Patent 4,156,069 of Prevorsek et al. (issued May 22, 1979) and three articles by Kolesnikov et al. published in Vysokomol. Soyed. as, respectively, A9: No. 5, pp. 1012-1015 (1967); A9: No. 7, pp. 1520-1524 (1967); and A10: No. 1, pp. 145-51 (1968). These polymers are formed by a condensation of a bisphenol such as 2,2-bis-(4-hydroxylphenyl)-propane (known as bisphenol-A),

phosgene and a dicarboxylic acid or acid halide such as terephthalic chloride, with the moles of bisphenol approximately equal to the combined moles of phosgene and acid or acid chloride. As described in U.S. Patent 4,156,069 the most desirable combination of properties, including melt processibility, high glass transition temperature, high molecular weight as indicated by specific viscosities in the range of 0.5 to 1 and high Izod impact resistance are achieved when the molar ratio of phosgene to acid chloride is near 1 (such as about 0.:81 to about 1.2:1) and where the distribution of polycarbonate and polyester linkages are relatively random, without the presence of large polyester and large polycarbonate blocks.

While the poly(ester carbonates) described in U.S. Patent 4,156,069 have the desired combination of properties for many applications, for certain applications such as cookware, wire coatings, electrical parts and motor housings, dimensional stability above about 180°C as evidenced by glass transition temperature higher than this figure is desirable.

Accordingly, it is an object of this invention to provide poly(ester carbonates) having a glass transition temperature at least about 200°C with the retention, or at least minimal loss of other properties, especially as compared to the poly(ester carbonates) described in U.S. Patent 4,156,069.

## BRIEF DESCRIPTION OF THE INVENTION

The present invention includes an improved poly(ester carbonate) consisting essentially of about equimolar amounts of aromatic dihydric alcohol moieties and a combination of carbonate moieties and aromatic or cycloaliphatic dicarboxylic acid moieties. In the improvement, at least about 25 mole percent of the aromatic dihydric alcohol moieties are of the formula

I 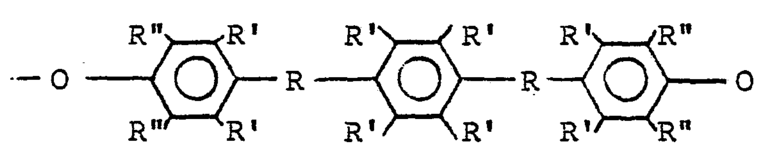

where R is alkylene of 1-6 carbons, -O-, -S-, -CO- or a single bond,

R' is independently at each occurrence H, Br, Cl, F, alkyl of 1-6 carbons or phenyl and

R" is independently at each occurrence Br, Cl, F or alkyl of 1-6 carbons; and

said poly(ester carbonate) has a glass transition temperature above about 200°C.

The present invention also includes such a poly(ester carbonate) molded, extruded or formed by other thermoforming techniques in the form of film, sheet, ribbon, fiber, and shaped articles of various types.

DETAILED DESCRIPTION OF THE INVENTION

The poly(ester carbonates) of the present invention are formed by the condensation of a bisphenol, phosgene and an acid or acid halide. The relative ratio of phosgene to acid or acid halide is not critical in the present invention, but may vary between about 10:1 and about 1:10, depending on the desired properties. In general, when attempting to achieve high glass transition temperatures, it is preferred that the acid or acid halide be at least approximately equimolar with phosgene such that the ester to carbonate ratio is at least about 0.8:1 and is preferably between about 1:1 and about 1.3:1.

Aromatic, monocyclic dicarboxylic acids and acid halides suitable for the present invention include those of the formula II:

II

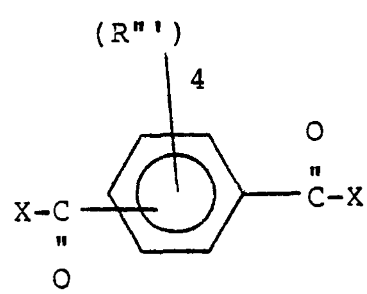

Where X is hydroxyl, Cl or Br and R"' is independently at each occurrence H, Cl, Br, alkyl of 1-6 carbons, phenyl alkoxy of 1-6 carbons or phenoxy. Suitable

cycloaliphatic dicarboxylic acids and acid halides of the formula III:

III 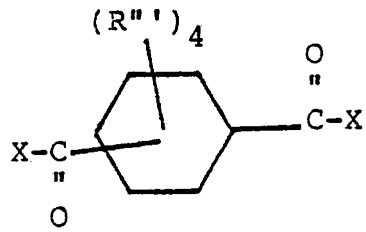

where X and R"' are as described above. Other suitable acids and acid halides are of the formula IV:

IV 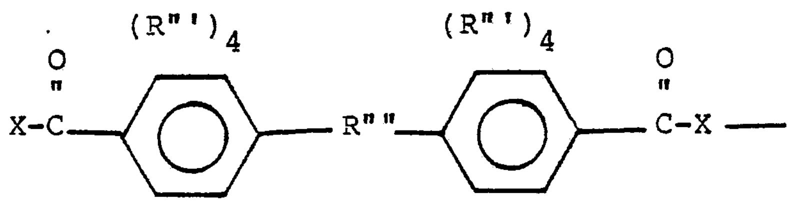

where X and R"' are as described above and R"" is -CO-, alkylene of 1-6 carbons, -O-, -S- or a single bond; and of the formula V:

V 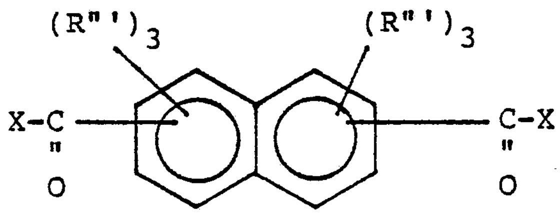

where X and R"' are as described above. In the cases illustrated by formulas II and III, the acid or acid halide groups are 1,3 (meta) or 1,4 (para), and are preferably 1,4 (para). In the case described by formula IV, the acids or acid halides are meta or para to the linking group R"" that is the 3,3'-, 3,4'- and 4,4'-isomers, and preferably both para as in the 4,4' isomer. In the case described by formula V, the acid or acid halide groups are either 2,6 or 2,7. In all cases, the unsubstituted forms wherein R"' is hydrogen in all occurrences is preferred. In all cases the acid halides where X is Cl or Br, and especially Cl, is preferred. Thus, this monomer is preferably one or more of

terephthalic chloride or bromide, isophthalic chloride or bromide, 1,4-cyclohexanedicarboxylic acid chloride or bromide, 1,3-cyclohexanedicarboxylic acid chloride or bromide, 3,3'-, or 3,4'or 4,4'-benzophenone dicarboxylic acid chloride or bromide, 2,6-naphthalene dicarboxylic acid chloride or bromide and 2,7-naphthalene dicarboxylic acid chloride or bromide. More preferred in each case are the acid chlorides.

Based upon the use of the above preferred acid halide monomers, it will be appreciated that the preferred cycloaliphatic dicarboxylic acid moieties are terephthaloyl, isophthaloyl, 1,4-cyclohexanedicarboxyl, 1,3-cyclohexanedicarboxyl, 3,3'- or 3,4'- or 4,4'-benzophenone dicarboxyl, 2,6-naphthalene dicarboxyl and 2,7-naphthalene dicarboxyl.

The present invention contemplates that at least about 25% of the bisphenol is a tricyclic aromatic bisphenol of the following formula I:

I 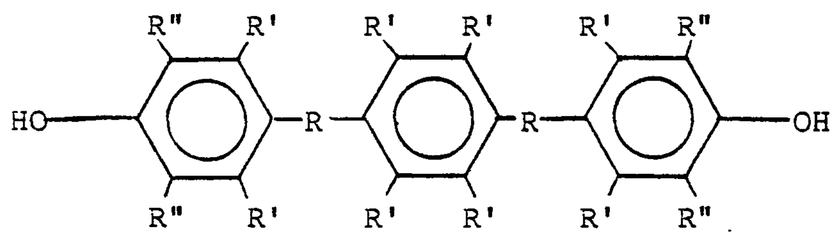

The R or linking groups can be alkylene, ether linkages (-O-), sulfide linkages (-S-) carbonyl linkages (-CO-) or a single bond. Preferably, these linkages are alkylene and especially isopropylidene. The R' substituents may be hydrogen, or may be for example, bromine, chlorine, alkyl of 1-6 carbons, phenyl, alkoxy of 1-6 carbons or phenoxy. The presence of substituents in the six positions designated by R' other than hydrogen, and especially in the four positions on the central phenyl, have relatively little effect upon properties of poly(ester carbonate) compared to the basic monomer where R' is hydrogen in all positions. Mainly because of ease of synthesis, all of the R' substituents are preferably hydrogen.

It is an important feature of the present invention that all four R" substituents are not hydrogen. The effect of these substituents is to block or somehow shield the hydroxyls. Especially with regard to carbonate linkages, this blocking effect is believed to directly inhibit the flexibility of the polymer and thus to raise glass transition temperature.

A carbonate linkage in oligomer or polymer is shown by formula VI with all R' substituents omitted:

VI 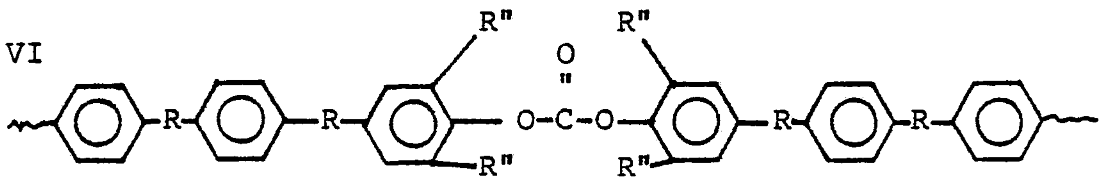

It can be seen that the four R" substituents surround the $CO_3$ or carbonate linkage. In a sense, it is believed that these substituents or "blocking groups" rigidify the polymer at elevated temperatures and thus inhibit melting.

As shown by the following examples, not all ortho, ortho blocked bisphenols are suitable. In particular, blocked bicyclic bisphenols such as 2,2-bis(4-hydroxy-2,6-dimethylphenyl)-propane rigidify the polymer to an excessive extent at low temperatures. This effect has not been observed with blocked tricyclic bisphenols, as are used herein. The result is that, even though the glass transition temperature is raised by using blocked bicyclic bisphenols, other desirable properties of the poly(ester carbonate) such as ductility, are lost. Additionally, the use of tricyclic aromatic bisphenols by itself does not achieve the desirable properties where at least some of the substituents on a position ortho to the hydroxyl group are hydrogen.

The key properties of the polymer that must be substantially retained compared to the polymers of U.S.

Patent 4,156,069 are ductility and toughness, as indicated by high ultimate and yield elongations according to ASTM D638, high energy to break. The key properties that must improve are high temperature dimensional stability as evidenced by a glass transition temperature at least about 200°C. and resistance to acid and base hydrolysis. It will be appreciated that a polymer of this type normally has dimensional stability up to within 10-20°C of its glass transition temperature, but that the temperature at which dimensional stability is lost may not be measurable with great precision. Accordingly, the characteristic of dimensional stability is best delineated by the more precise glass transition temperature value with the understanding that the advantageous properties of the polymer actually exist only up to a temperature 10-20°C below the glass transition temperature.

The method by which the bisphenol is condensed with the phosgene and the acid or acid halide is also not critical to the present invention.

A solution method may be used in which all components together or various proportions of them at various times are dissolved in an organic solvent, and especially a chloroaliphatic solvent such as dichloromethane, in the presence of stoichiometric amounts of an organic base such as pyridine. Such methods are described for poly(ester carbonates) prepared from bisphenol A in U.S. Patent 4,156,069 and in copending applications 6,947 of Baker et al. filed January 25, 1979 and 6,819 of Cooke et al. filed January 26, 1979, all of which are incorporated herein by reference. The present invention is not, however, limited to polymers prepared by this particular process, but also includes the condensation products of the above monomers in other solution systems and by interfacial techniques. Example 1 herein employs such interfacial processes as are described more fully in copending application 29,422 of Segal et al. (filed April 12, 1979).

A preferred method of producing the subject poly(ester carbonates) is a hybrid of the solution and interfacial techniques illustrated in Example 3. In that method the aromatic dihydric alcohol, or at least that portion of it which is of above Formula I, is reacted with aromatic or cycloaliphatic acid or (preferably) acid halide in an organic solvent with an organic base present in at least about stoichiometric amounts. A polyester soluble in the organic solvent is thereby formed. As illustrated by Example 7, the initial polyester may be formed from the acid chloride and a mixture of at least one bisphenol of Formula I [e.g. o,o,o',o'-tetramethyldicumylbisphenol or TMDCB] and at least one other bisphenol [e.g. bisphenol-A] in a proportion that assures that the polyester oligomer will be soluble in the organic solvent.

Preferably after acidification and water washing, this organic phase is then mixed with a basic aqueous phase (such as aqueous sodium hydroxide) and phosgene admitted to link the polyester oligomers with carbonate linkages. Additional amounts of either or both bisphenols may be added with the phosgene or during the subsequent interfacial polymerization, as in Example 7. After polymerization is complete, stirring is stopped; clean phase separation occurs; and the organic layer can be washed with water and acidified with an organic acid until a clean solution of the polymer in the organic solvent is obtained. The polymer can then be precipitated from the organic phase by adding the organic phase to another solvent such as an alcohol or ketone. The polymer may be redissolved, washed again and reprecipitated, all as exemplified by Example 3.

The substituted tricyclic aromatic bisphenols used in the present invention are, in general, known materials. Methods of synthesizing these monomers are either known or would be readily apparent from published literature such as U.S. Patent 3,393,244 to Broderick et al. (issued July 16, 1968) which describes unsubstituted

tricyclic aromatic bisphenols. U.S. Patent 3,879,348 describes some such bisphenols at columns 3-6 and in Examples 7-14. The following represent typical synthetic routes for different R linkage groups.

Where R is to be alkylene, it is desirable to start with the central aromatic ring having two R substituents, each with an active end-group Y and to condense this material with two moles of a substituted phenol having an active end group Z para to the hydroxyl. This reaction is shown by equation VII:

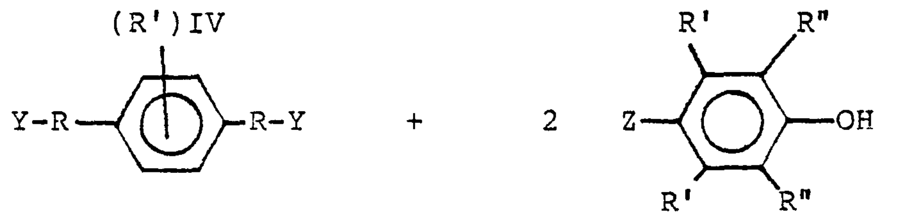

VII

39 Formula I + 2 YZ

Reactive end groups Y and Z are chosen in a manner such that Y will react only with Z and not with the hydroxyl or with the R' or R" substituents on the substituted phenol. Similarly the Z group is chosen so that it will react with the Y group and not with the R' substituent on the other monocyclic starting material. It should be appreciated that Z may be hydrogen if Y can combine with hydrogen as a good leaving group. An example of this condensation is the following reaction VIII:

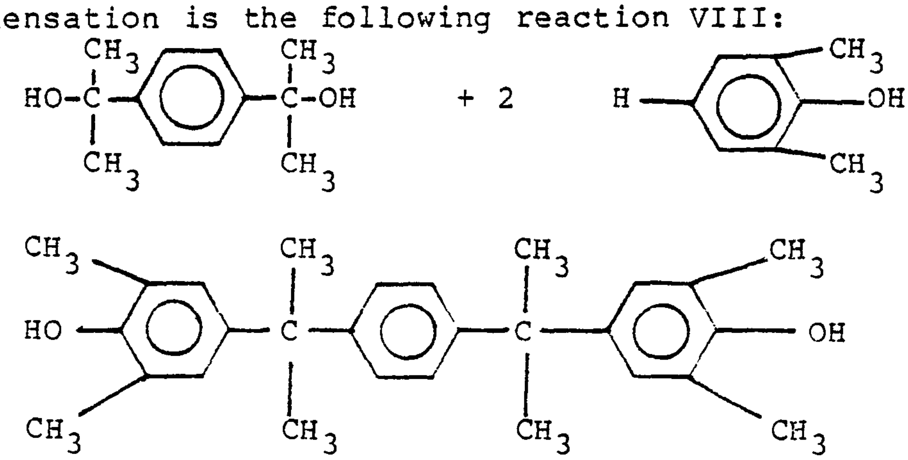

VIII

The first starting material may be produced by the oxidation with excess $O_2$ of para-diisopropylbenzene.

An alternative method of synthesizing at least some of the tricyclic aromatic bisphenols is to react a

monocyclic starting material having unsaturated side group materials with aromatic materials which can add across the unsaturated bond.

In producing the present polymers, materials other than the bisphenols and the dibasic acids may become incorporated into the chain. For example, para-t-butyl phenol and other conventional chain length regulators may be used to control the polymer length, with increasing amounts of this additive usually resulting in lowered specific viscosities, other conditions being equal. Thus, if a 2:1:1 molar ratio TMDCB: terephthaloyl:carbonate polymer is prepared, the use of about 0.5% para-t-butyl phenol (by moles of TMDCB) will result in a specific viscosity of about 2-3 dL/g, using 1.0% para-t-butyl phenol will lower the specific viscosity to 1-2 dL/g, while using 1.5% para-t-butyl phenol will lower the specific viscosity to 0.5-1 dL/g. Using a combination solution-interfacial method as in Example 3, for the same 2:1:1 TMDCB:terephthaloyl: carbonate ratio, the effect of different levels of para-t-butyl phenol is more pronounced. Thus 0.25% p-tert-butyl phenol produced a specific viscosity over 4 dL/g, 0.5% p-tert-butyl phenol produced a specific viscosity of 2-3 dL/g, 0.75% para-t-butyl phenol produced a specific viscosity of 1-2 dL/g and 1.0% para-t-butyl phenol produce a specific viscosity of 0.3-0.7 dL/g. The curves are dependent, however, on particular reactor configuration, conditions and other factors, and thus should be developed by routine experimentation in each case. In general, however, less than 2% para-t-butyl phenol is effective as a chain growth regular, with additonal material being used after the reaction is complete to cap terminal acid chloride and chloroformate groups.

Since additional materials like the t-butyl phenol are incorporated into the polymer only in small proportions, the polymer can be thought of a consisting essentially of dihydric alcohol moieties, carbonate

moieties, carbonate moieties and aromatic or cycloaliphatic dicarboxylic acid moieties.

In addition to the compression molding methods described in Example 7 that follows, the present poly(ester carbonates) can also be compression molded at differing pressures and temperatures above the glass transition temperature, preferably about 80-100°C above the glass transition temperature. Such compression molding methods are similar to those known from compression molding of polycarbonates. Additionally, the present poly(ester carbonates) can be solution cast in a conventional manner. Furthermore, they can be injection molded at mold temperatures above the glass transition temperature with barrel or screw temperatures above the glass transition temperatures, preferably about 80-150°C above the glass transition temperature in a manner similar to that employed in the injection molding of polycarbonates.

The following examples are intended to illustrate preferred modes of the present invention and should not be read to limit the scope of the invention as set forth in the claims that follow.

Example 1

Diisopropyl benzene $\alpha,\alpha'$-diol was prepared by bubbling gaseous oxygen into a vigorously stirred suspension of the diisopropylbenzene (900 g) in 40% aqueous sodium hydroxide (1260 g) at 100°C for 10 hours. The crude product was filtered, extracted with petroleum ether and then water until neutral. The product was recrystallized from ethanol/water to give 294 g of material which was further purified by two recrystallizations from 1,2-dichloroethane. The final yield of highly pure diol was 255 g with mp = 142-144°C. The calculated elemental analysis based on the formula ($C_{12}H_{18}O_2$) is %C = 74.19, %H = 9.34; what was found is %C = 74.28, %H = 9.44. The 60 MHz NMR spectrum ($CDCl_3$/DMSO-$D_6$) showed a singlet at 1.5$\delta$(aliphatic gem-$CH_3$), a broad singlet at 4.4$\delta$ (OH) and a singlet at 7.4$\delta$(phenyl)

with an integration ratio of 12:2:4 as required by the proposed structure. Unreacted diisopropyl benzene extracted in the petroleum ether was recycled in subsequent preparations.

The TMDCB monomer was prepared by addition of the above purified diol (109 g, 0.56 mole) in 10 g portions over two hours to a solution of p-toluene sulfonic acid (2.8 g, 0.17 mole) in freshly distilled 2,6-dimethyl phenol (686 g, 5.6 moles) at 65°C. After addition was completed, the solution was stirred at 65-70°C for an additional 2 hours. Water was then added to about five times the volume and the catalyst neutralized with aqueous ammonia. The mixture was subjected to steam distillation until the removal of unreacted phenol was complete. The yield of crude solid at this point was 212 g (94% based on diol). The solid was dissolved in chloroform (940 mL) and the solution was evaporated to dryness on a rotoevaporator. The solid was recrystallized twice from cyclohexane to give 128 g of pure white crystalline monomer, mp = 158-160°C. The calculated elemental analysis of the formula ($C_{28}H_{34}O_2$) %C = 83.54, %H = 8.51; what was found is %C = 83.77, %H = 8.46. The 60 MHz NMR spectrum ($CDCl_3$/DMSO-$D_6$) showed a singlet at 1.58$\delta$(aliphatic gem - $CH_3$), a singlet at 2.16$\delta$(aromatic $CH_3$), a broad singlet at 5.56$\delta$ (OH), a singlet at 6.78 $\delta$ (aromatic protons on phenolic ring) and a singlet at 7.08$\delta$(aromatic protons on phenyl ring). The integration ratio was 12:12:2:4:4 as required by the proposed structure.

## Comparative Example 2

## Polycarbonate of TMDCB - Interfacial Polycondensation

A slurry of TMDCB monomer (20.13 g, 0.05 mole) in a solution comprised of distilled deoxygenated water (250 mL), sodium hydroxide (16 g, 0.4 mole), sodium dithionite (0.1 g) and triethylamine (0.7 mL, 0.005 mole was prepared under a nitrogen atmosphere. Dichloromethane (250 mL) was added and the mixture stirred at 300 rpm at 20-25°C while phosgene was admitted as

described before. After the pH of the aqueous phase had reached 10, all solid monomer was dissolved and both phases were clear. Phosgene addition was continued until the pH approached 7. At this time aqueous sodium hydroxide (50 mL, 0.4 mole) was added and the polycondensation was allowed to proceed for three hours. The mixture was then diluted with water (150 mL) and the dichloromethane (110 mL). The organic phase was separated and worked-up by the washing and precipitation methods discussed in Example 1. The yield of dry polymer was 18 g with $\eta_{sp/c}$ = 1.93 dl/g (C = 0.5, $CH_2Cl_2$). The polymer was insoluble in phenol/TCE. Elemental analysis was calculated based on formula $C_{29}H_{32}O_3$ as %C = 81.27, %H = 7.53 and found as %C = 81.14, %H = 7.55. The 60 MHz NMR spectrum ($CDCl_3$) showed a singlet at 1.61 $\delta$ (aliphatic gem - $CH_3$), a singlet at 2.22 $\delta$ (aromatic $CH_3$), a singlet at 6.88$\delta$(aromatic protons ortho to $CH_3$) and a singlet at 7.06 $\delta$ (center aromatic ring protons). The integration ratio was 12:12:4:4 as required by the proposed structure. The Tg of the polymer was 190°C (DSC) with no indication of melting below 350°C. The polymer was thermally stable up to 275°C with major decomposition occurring above 400°C.

Example 3

A slurry of TMDCB monomer in aqueous solution was prepared as indicated above, except that in this case the amount of sodium hydroxide used initially was 6 g (0.15 mole). Dichloromethane (100 mL) was added under the same conditions of stirring and temperature followed by a solution of terephthaloyl chloride (5.075 g, 0.025 mole) in dichloromethane (150 mL). After five minutes, phosgene gas was admitted under stirring until the pH reached 7 (30 minutes). Aqueous sodium hydroxide (20 mL, 0.15 mole) was added and phosgenation was continued until the pH again reached 7 (45 minutes). At this point additional aqueous sodium hydroxide (60 mL, 0.45 mole) was added and polycondensation allowed to proceed for three hours. During this time the viscosity of the

mixture became so high that dilution with dichloromethane (100 mL) became necessary. The mixture was diluted with water (200 mL) and worked-up as described in Example 1. The yield of dry copolymer was 23.3 g with $\eta_{sp/c}$ = 1.8 dL/g (C = 0.5, $CH_2Cl_2$). The ratio of TMDCB/ terephthalate/carbonate in the copolymer was 2:1:1 by infrared analysis using pure polycarbonate and pure polyester as standards. Thermogravimetric analysis was 210°C (DSC) with no evidence of melting below 375°C. The TGA showed that major decomposition of the copolymer started at about 400°C. The properties of molded products of this material are indicated in Example 8.

## Example 4

Five polyester oligomers were prepared by separately dissolving in dichloromethane (about 175 mL total) terephthaloyl chloride 5.075 g (0.025 mol) and twice that molar amount of either TMDCB or a combination of TMDCB and bisphenol A, and pyridine (0.15 mol). The five oligomers had TMDCB as a molar percentage of total bisphenol of 100%, 90%, 80% 70% and 60% in the feed. Analysis of the oligomers produced indicated the same molar TMDCB to bisphenol A ratio as in the feed except for the last oligomer where the percentage of TMDCB was 65% in the oligomer versus 60% in the feed. The fifth polymer was not further reacted because it was only partially soluble in dichloromethane. Accordingly, the procedure of Example 7, below, would be used if it were desired for more than 30% of the bisphenol to be bisphenol A and less than 70% of the bisphenol to be TMDCB.

The four polyester oligomers having 100%-70% TMDCB were converted to poly(ester carbonates) by adding each in dichloromethane solution to deoxygenated water (250 mL), and adding sodium hydroxide (8 g, 0.2 mol) and triethylamine (0.35 mL, 0.0025 mol). The mixture formed an emulsion when stirred at 3000 rev/min in a 1 L glass flask. Phosgene gas was admitted over a period of about 45 minutes until the pH of the aqueous phase was 8. After 15 minutes of phosgene addition 0.057 g (0.75 mol)

p-tert-butyl phenol was added as a chain growth regulator. With the pH about 8, 0.05-0.1 mol of sodium hydroxide was added to return the pH to about 12 and stirring was resumed for about 3 hours to complete condensation. 0.225g of p-tert-butyl phenol (3 mol% of the total bisphenol) was added for end-capping.

After at least 20 minutes the stirrer was stopped, and for the 100% TMDCB case, immediate phase separation occurred. The polymer phase was then washed successively with water until the pH was $\leq 8$ and the washings gave a negative response to chloride ion with aqueous silver nitrate. The polymer phase was acidified with dilute acetic acid, and washing was continued until the pH was 6-7. Polymer was isolated by precipitation into 2-propanol followed by vacuum drying at 120°C. The polymer was then redissolved in dichloromethane (5 to 10% solution), and the resultant clear solution was washed several times with water. The final polymer was obtained by re-precipitation in 2-propanol.

For the 80% TMDCB case, after 20 minutes the reaction mixture was diluted with 200 mL dichloromethane and was worked up as described above. The yield of final polymer was 21 g with $\eta_{sp}/C$ = 1.10 dL/g (C=0.5, $CH_2Cl_2$). The Tg was 208°C and the TGA showed major decomposition in a single step above 400°C. The ratio of total bisphenols to terephthalate was 2:1 by IR spectroscopy. The ratio of TMDCB to BPA was estimated by nmr spectroscopy as (4:1).

Example 5

A solution of pure TMDCB (20.13 g, 0.05 mole) was prepared in a mixture of distilled dichloromethane (100 mL) and anhydrous pyridine (12.07 mL, 0.15 mole) under a nitrogen atmosphere. To this solution pure terephthaloyl chloride (5.075 g, 0.025 mole) dissolved in distilled dichloromethane (75 mL) was added rapidly at 25°C with good stirring. After two hours at 25°C the homogeneous solution was washed twice with 200 mL of 5% aqueous HCl followed by water until neutral. The clear

water-white solution was then placed in a reaction flask containing a solution of distilled deoxygenated water (250 mL), sodium hydroxide (8 g, 0.2 mole) and triethyl amine (0.35 mL, 0.0025 mole). The mixture readily formed an emulsion upon stirring at 300 rpm. Phosgene gas was then added until the pH of the aqueous phase was 8 (45 min.). At this point aqueous sodium hydroxide (0.05 mole, 25 mL) was added to return the pH to >12 and the polycondensation stage was allowed to proceed with stirring for an additional 3 hours. The polymer phase was then washed successively with water until the pH was ≥8 and the washings gave a negative response to chloride ion with aqueous silver nitrate. The polymer phase was acidified with dilute acetic acid, and washing was continued until the pH was 6-7. Polymer was isolated by precipitation into 2-propanol followed by vacuum drying at 120°C. The polymer was then redissolved in dichloromethane (5 to 10% solution), and the resultant clear solution was washed several times with water. The final polymer was obtained by re-precipitation in 2-propanol. The yield of dry polymer was 21 g with $\eta_{sp}/C$=4.06 dL/g (C=0.5, $CH_2Cl_2$). The Tg was 214°C. TGA showed decomposition in a single step above 400°C. The ratio of TMDCB to terephthalate in the final polymer was 2:1 as determined by IR spectroscopy. The material gave a transparent molding at 320°C.

Viscosity measurements were made on polymer preared from the 100% TMDCB oligomer and from the 90%, 80% and 70% oligomers in a like manner. Their respective specific viscosities were 1.10, 1.40, 1.10 and 0.81.

Example 6

A slurry of purified TMDCB monomer (92.6g, 0.23 mole) in a solution containing distilled deoxygenated water (1150 mL), sodium hydroxide (27.6 g, 0.69 mole), sodium dithionite (0.46 g) and triethylamine (3.2 mL, 0.23 mole) was prepared in a 5 L flask under a nitrogen atmosphere. Distilled dichloromethane (460 mL) was added and the mixture was stirred at 300 rev/min at

25°C. A filtered solution of purified terephthaloyl chloride (23.3 g, 0.115 mole) in dichloromethane (460 mL) was then added rapidly to the flask. After ten minutes, a solution of p-t-butyl phenol (0.52 g, 1.5 mole% on TMDCB) in dichloromethane (230 mL) was added followed by phosgene gas. The phosgene was added until the pH of the aqueous phase reached 7 (60 min). Additional sodium hydroxide was then added as a 50% aqueous solution (24 g NaOH) and phosgenation continued until the pH dropped to 8. At this point, the final addition of sodium hydroxide was made (54 g) and the polycondensation was allowed to proceed for 3.5 hours at 25°C under continuous stirring. The polymer phase was worked up by successive water washing, although the presence of a stable water-polymer solution emulsion precluded an effective washing. The polymer phase was then acidified with aqueous acetic acid and washing was continued and the polymer was precipitated in isopropanol and dried.

Example 7

TMDCB (50 g, 0.124 mole) and bisphenol-A (12.1 g, 0.053 mole) were dissolved in a mixture of distilled dichloromethane (354 mL) and anhydrous pyridine (49.9 mL, 0.62 mole) under nitrogen. A solution of terephthaloyl chloride (21 g, 0.1035 mole) in dichloromethane (295 mL) was then added rapidly at 25°C with stirring. The homogeneous solution was washed as in Example 5. The composition of the oligomer in terms of relative mole % bisphenols was at this point 70 mole % TMDCB, 30 mole % BPA.

The above oligomer solution was stirred at 300 rpm with a solution comprised of deoxygenation distilled water (1033 mL), sodium hydroxide (33.1 g, 0.83 mole), triethylamine (1.48 mL, 0.0103 mole) and bisphenol-A (6.85 g, 0.03 mole). After 15 minutes of phosgene addition, a solution of p-t-butyl phenol (0.233 g, 0.75 mole) in dichloromethane (5 mL) was added. Phosgenation was continued for 60 minutes at which time the pH had reached 6. Aqueous sodium hydroxide (16 g, 0.4 mole in 50 mL

water) was added, and the polycondensation was allowed to proceed for an additional four hours. At this point, p-t-butyl phenol (0.62 g, 2 mol %) in dichloromethane (10 mL) was added. After 20 minutes the reaction mixture was worked up as described above. The yield of final polymer was 78 g with $\eta_{sp}/C$ = 0.99 dL/g (C=0.5, $CH_2Cl_2$). The Tg was 200°C and the TGA showed major decomposition in a single step above 400°C. The ratio of total bisphenols to terephthalate was 2.05:1 by IR spectroscopy. The mole fraction of TMDCB to total bisphenols was estimated by NMR spectroscopy as 0.6.

In a similar manner, copolymers having 50 and 60 mole % BPA were prepared. In both cases, the ratio of total bisphenols to terephthalate was close to 2:1 by IR measurements and the mole fraction of TMDCB to total bisphenols was 0.5 and 0.4, respectively, by NMR spectroscopy. The Tg values were 195°C and 191°C, respectively. The specific viscosities were 0.8 and 0.9 respectively.

Example 8 Molding of Polymers

Specimens were molded from the polymers of Comparative Example 2 and Examples 3, 4 (100% case only), 6 and 7 (60% case only) at 320°C and 550 Pa (80 pounds per square inch) for 10 minutes. For the mechanical measurements, sheets of about one-sixteenth inch (0.158 cm) thickness were molded and specimens of the size prescribed by ASTM D628, condition 5, were stamped out. For optical measurements, discs of one-eighth inch (0.32 cm) thickness and one inch (2.54 cm) diameter were molded. Square test plaques of 5 inch (12.70 cm) width and one-eighth inch (0.32 cm) thickness were also molded from materials prepared as in Example 4, 100% TMDCB case, which example had been scaled up by a factor of 5. The optical values from these plaques were substantially identical to the values in Table I for Example 4 (100% TMDCB). Similar 3-inch (7.62 cm) square placques were malleable and withstood hammer blows by deforming without shattering. Values for Example 6 were similar to those for the 100% case of Example 4.

Solution cast films have also been prepared from each polymer prior to final precipitation from dichloromethane. Each appeared transparent, tough and ductile.

Utilizing an Instron Constant Rate of Strain tester and following the conditions of ASTM D638, Condition 5, values for ultimate elongation (UE), yield elongation (YE), tensile strength, yield strength and initial modulus were determined. Haze indices and yellowness indices were determined by spectrophotometric methods as described in U.S. Patent 4,156,069 including ASTM D-1925. These values are shown in Table I:

TABLE I - PROPERTIES OF MOLDED POLYMERS

| | Poly(ester carbonate) | Polycarbonate |
|---|---|---|
| Example | 3 | C2 |
| % UE | 50 | 18.7 |
| % YE | 16 | 14.5 |
| tensile strength MPa (psi) | 1.32 (9,120) | 1.64 (11,300) |
| Yield Strength MPa (psi) | 1.54 (10,630) | - |
| Modulus MPa (psi) | 44.45 (306,580) | 47.23 (325,740) |
| Haze Index | 20-25 | 10-15 |
| Yellowness Index | 19-35 | 12-18 |
| % Transmittance | 70-80 | 85 |
| | | |
| Example | 4 (100% TMDCB) | 7 (60% TMDCB) |
| % UE | 60-90 | 80-100 |
| % YE | 17-20 | 25-32 |
| tensile strength MPa (psi) | 62-69 MPa (9,000-10,000) | 65 MPa (9500) |
| Yield Strength MPa (psi) | 66-76 MPa (9,500-11,000) | 69-76 Mpa (10,000-11,000) |
| MOR MPa (psi) | 1970-1930 MPa (260,000-280,000) | 1897-1959 (275,000-284,000) |
| Haze Index | 15 | 11 |
| Yellowness Index | 12 | 9 |
| % Transmittance | 83 | 85-88 |

When tested for impact strength by ASTM D-256, samples

1/8 inch (3.1 mm) thick, prepared by the procedure of Example 4 (100% case) had notched impact strengths of 1-1.2 ft-lb/in or 53 - 63.6 J/m and unnotched impact strengths of 21-22 ft-lb/in or 1113 - 1116 J/m.

Example 9 - Hydrolysis Resistance of Polymers

In order that the hydrolytic stability of the subject polymers can be assessed under realistic service conditions, experiments were conducted on molded sheets. The sheets were molded as described in Example 8 and the sheet thicknesses kept constant at about 0.5 mm so that the weight loss per unit area values could be directly compared.

Two sets of data are reported here which represent the most severe conditions studied for aqueous acid and base hydrolysis. The results of aqueous acid hydrolysis for some selected polymers are shown in Table II. In this experiment, the polymer sheets were immersed in refluxing 5N aqueous HCl for the specified times. The last two entries in the table are for reference purposes. In all cases, there was no detectable weight loss. However, the sample of BPA poly(ester carbonate) showed a tendency to embrittle during the exposure and eventually broke apart. All other samples retained their original appearance and flexibility. The results for aqueous base hydrolysis for the same sample types are shown in Table III. For this experiment, the polymer sheets were immersed in 5N aqueous sodium hydroxide at 80°C. It should be noted that these conditions of base concentration and temperature are extremely severe for typical polycarbonates and polyesters, as can be seen from the results for both bisphenol-A polycarbonate (Lexan, a trademark of General Electric) and BPA poly(ester carbonate). Both polymer samples were totally degraded after 60 hours of exposure (degraded to monomers). With respect to weight loss and physical appearance, all polymers derived from TMDCB were unaffected. What is most surprising is that even co-poly(ester carbonates) of TMDCB containing up to 30 mole % bisphenol-A remained unaffected under these

conditions. From the viscosity data in the tables, it can be seen that the TMDCB samples do not show any great degree of chain scission while the two controls show complete degradation in base.

TABLE II

| Polymer Sample (Example) | Exposure Time (hrs.) | Wt. Loss (mg/cm2) | $\eta_{sp}/C$ (dL/g) Initial | Final |
|---|---|---|---|---|
| (4) 100% TMDCB | 60 | 0 | 1.10 | 0.91 |
| (4) 80% " [a] | " | 0 | 0.91 | 0.78 |
| (4) 70% " [b] | " | 0 | 0.78 | 0.60 |
| BPA poly(ester carbonate) | " | 0[c] | 0.42 | 0.28 |
| BPA polycarbonate | " | 0 | 0.61 | 0.51 |

[a] 20 mole % BPA
[b] 30 mole % BPA
[c] embrittled

TABLE III

| Polymer Sample (Example) | Exposure Time (hrs.) | Wt. Loss (mg/cm2) | $\eta_{sp}/C$ (dL/g) Initial | Final |
|---|---|---|---|---|
| (4) 100% TMDCB | 60 | 0 | 1.10 | 0.95 |
| (4) 80% TMDCB[a] | " | 0 | 0.91 | 0.80 |
| (4) 70% TMDCB[b] | " | 0 | 0.78 | 0.63 |
| BPA poly(ester carbonate) | 44 | 4.03 | 0.42 | -- |
| BPA poly(ester carbonate) | 60 | d | " | 0 |
| BPA polycarbonate | <20 | d | 0.61 | 0 |

[d] completely degraded

What is claimed is:

1. Improved poly(ester carbonate) consisting essentially of about equimolar amounts of aromatic dihydric alcohol moieties and a combination of carbonate moieties and aromatic or cycloaliphatic dicarboxylic acid moieties, characterized by at least about 25 mole percent of the aromatic dihydric alcohol moieties being of the formula

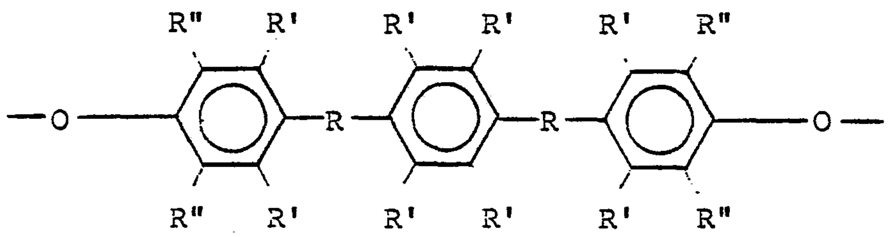

where R is alkylene of 1-6 carbons, -O-, -S-, -CO- or a single bond,

R' is independently at each occurrence H, Br, Cl, F, alkyl of 1-6 carbons, or phenyl, and

R" is independently at each occurrence Br, Cl, F or alkyl of 1-6 carbons;

said poly(ester carbonate) having a glass transition temperature above about 190°C.

2. The poly(ester carbonate) of claim 1 wherein R' is hydrogen at each occurrence.

3. The poly(ester carbonate) of claim 1 or 2 wherein R is alkylene of 1-6 carbons.

4. The poly(ester carbonate) of claim 3 wherein R is isopropylidene at each occurrence.

5. The poly(ester carbonate) of either of claim 1 or claim 3 wherein R" is alkyl of 1-6 carbons at each occurrence.

6. The poly(ester carbonate) of either of claim 1 or claim 3 wherein R" is methyl at each occurrence.

7. The poly(ester carbonate) of claim 1 wherein the aromatic or cycloaliphatic dicarboxylic acid or moiety is selected from the group consisting of terephthaloyl moieties, isophthaloyl moieties and mixtures thereof.

8. The poly(ester carbonate) of claim 1 wherein the molar ratio of aromatic or cycloaliphatic dicarboxylic acid moieties to carbonate moieties is between about 1.1:1 and about 1.3:1.

9. The poly(ester carbonate) of claim 1 wherein at least about 50 mole percent of the aromatic dihydric alcohol moieties is of the above formula.

10. The poly(ester carbonate) of claim 8 or 9 wherein the remainder of the aromatic dihydric alcohol moieties is

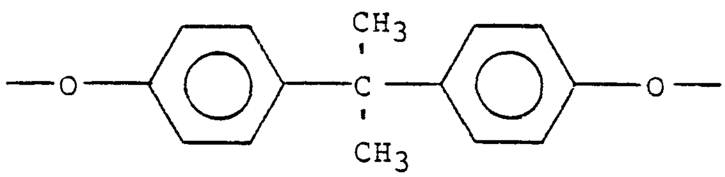

European Patent Office

# EUROPEAN SEARCH REPORT

0027844

Application number

EP 80 10 2780.6

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | DE - A - 2 122 574 (BAYER)<br>* claim 4 *<br>-- | 1-10 | C 08 G 63/64 |
| | US - A - 3 879 347 (SERINI et al.)<br>* column 1, lines 21, 27 to 31; example 3; column 5, lines 22 to 41 *<br>-- | 1-10 | |
| D | US - A - 3 879 348 (SERINI et al.)<br>* examples 7 to 14; column 8, lines 4 to 8; column 7, lines 57 to 64 *<br>-- | 1-10 | TECHNICAL FIELDS SEARCHED (Int. Cl.3) |
| D | US - A - 3 393 244 (BRODERICK et al.)<br>* column 2, lines 47 to 63 *<br>-- | 1-10 | C 08 G 63/00 |
| D,A | US - A - 4 156 069 (PREVORSEK et al.)<br>* abstract *<br>-- | 1-10 | |
| A | H. SCHNELL "Chemistry and Physics of Polycarbonates"<br>1964, Interscience Publishers, New York<br>* page 104, second line of the table; page 105, lines 21 to 23 *<br>---- | 1-10 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| Berlin | 30-01-1981 | KRAIL |

EPO Form 1503.1 06.78